## Europäisches Patentamt
## European Patent Office
## Office européen des brevets

(11) Veröffentlichungsnummer: **0 143 198**
**B1**

(12) **EUROPÄISCHE PATENTSCHRIFT**

(45) Veröffentlichungstag der Patentschrift:
04.02.87

(51) Int. Cl.⁴: **F 16 C 32/00**

(21) Anmeldenummer: **84110237.9**

(22) Anmeldetag: **29.08.84**

(54) Aerodynamisches Radiallager.

(30) Priorität: **01.09.83 DE 3331503**

(43) Veröffentlichungstag der Anmeldung:
**05.06.85 Patentblatt 85/23**

(45) Bekanntmachung des Hinweises auf die Patenterteilung:
**04.02.87 Patentblatt 87/6**

(84) Benannte Vertragsstaaten:
**DE FR GB IT**

(56) Entgegenhaltungen:
**DE-A-2 747 399**
**FR-A-2 464 401**
**FR-A-2 516 996**
**US-A-4 133 585**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hagemeister, Klaus, Dipl.- Ing., Manzostrasse 28 b, D-8000 München 50 (DE)**

LIBER, STOCKHOLM 1987

## Beschreibung

Die Erfindung bezieht sich auf ein aerodynamisches Radiallager, insbesondere für hochtourige Strömungsmaschinen, mit einer zwischen äußerer Lagerschale und Lagerzapfen den letzteren mehrfach umschlingenden Folie, deren äußeres Ende an der Lagerschale fixiert ist.

Ein derartiges Lager ist aus der DE-OS 29 34 271 bekannt.

Folienluftlager der beschriebenen Art sind z.B. vorteilhaft zum Einsatz für Strömungsmaschinen mit vergleichsweise hohen Wellendrehzahlen von etwa 40 bis 200 000 Umdrehungen pro Minute geeignet; sie zeichnen sich ferner durch eine hohe Temperaturbelastbarkeit aus und sind im übrigen auch vergleichsweise hohen mechanischen Belastungen gewachsen.

Bei diesen Lagern mit mehrfach gewickelter Folie wird die erforderliche Dämpfung des Lagers primär durch die Reibung zwischen den einzelnen Folienschichten sowie durch den sogenannten "Squeeze-Filmeffekt" der zwischen den einzelnen Folienschichten liegenden Luftfilme erzeugt (Quetschspaltfilmdämpfung). Dabei wird die erwähnte Dämpfung in erster Linie durch die die Lauffläche des Lagers bestimmenden und die sie umschlingenden Folienschichten erzeugt. Eine sich an diese zuvor genannten inneren Folienbandsektionen anschließende äußere Folienbandsektion (äußerer Folienteil) hat dann vornehmlich die Aufgabe, die Federwirkung und Steifigkeit des Lagers zu definieren, und zwar im Benehmen mit einer im vorliegenden bekannten Fall beispielsweise gleichförmig über dem Lagerumfang gewellt vorgeformten Ausführung dieser betreffenden äußeren Bandsektion. Im allgemeinen hat sich bei derartigen Folienluftlagern eine Foliendicke etwa von 30 bis 80 µm als äußerst vorteilhaft erwiesen in Kombination mit einer verhältnismäßig hohen Dehngrenze für die Folie, und zwar speziell im Hinblick auf die zuvor genannte äußere Bandsektion, die die notwendige Federwirkung und Steifigkeit des Lagers bereitstellen soll.

Bei derartigen bekannten Folienluftlagern mit mehrfach übereinander gewickelter Folie befindet sich das eine Ende des Folienstreifens als Störstelle im inneren, die Lauffläche des Lagers bildenden Folienteil. Das übrige äußere Ende der Folie wird im Lagergehäuse fixiert, um ein Mitrotieren der Folienlagerung bzw. des Folienpakets zu verhindern. Im eingangs erwähnten bekannten Fall muß sich also der Drehzapfen in der Wickelrichtung der Folie drehen, damit unter Wirkung der auftretenden Reibungskraft die Folie in der Lauffläche überhaupt aufgespreizt werden kann. Geschieht letzteres nicht, so wird sich die Folie wie eine Bandbremse auf den Drehzapfen festziehen. Bei der zuvor beschriebenen Art der Drehrichtung des inneren Lagerzapfens steht somit die Schnittfront des in der Lauffläche befindlichen Endes der Folie der Drehrichtung des Drehzapfens entgegen. Es ist nun beobachtet worden, daß Verunreinigungen der Luft, die während des Betriebes sich im Lager befinden, an dieser zuvor besprochenen Schnittkante des die innere Lauffläche bildenden Folienabschnitts anlaufen, dort Störkräfte verursachen und damit die Funktion des Lagers stark beeinträchtigen oder gar zur Zerstörung des Lagers Anlaß geben können.

Der Erfindung liegt die Aufgabe zugrunde, ein Folienluftlager zu schaffen, bei dem trotz Schmutzpartikeln in der Lagerluft keine Störungen und Beschädigungen auftreten, wobei die grundlegenden vorteilhaften Eigenschaften eines solchen Luftlagers nicht beeinträchtigt werden sollen. Die Lösung der gestellten Aufgabe ergibt sich erfindungsgemäß aus dem Kennzeichnungsteil des Patentanspruchs 1.

Auf diese Weise kann also die Wickelrichtung der Grundstruktur des Folienluftlagers derart zur Drehrichtung des Lagerzapfens angeordnet sein, daß die Folie durch tangentiale Kräfte in Drehrichtung aufgeweitet wird, wodurch dem Luftlager in der Tendenz ein größeres Laufspiel gegeben wird. Die sich an die innere, die Lauffläche bereitstellende Bandsektion der Folie anschließende Bandsektion des äußeren Folienteils kann demnach vorteilhafterweise im Sinne der Drehrichtung des Zapfens gewickelt angeordnet sein, um die notwendige Aufspreizwirkung bzw. Aufweitung der Folie zu erzeugen. Demgegenüber soll der die eigentliche Lauffläche bildende, dem Drehzapfen unmittelbar benachbarte innere Folienteil in Gegenrichtung zur Zapfendrehrichtung gewickelt angeordnet sein und zwar so, daß das innere Ende im Ablauf zur Oberfläche des Lagerzapfens liegt, so daß sich insbesondere an dieser Stelle keinerlei Schmutzpartikel verklemmen können.

Aufgrund der gegebenen Anordnung wird ferner verhindert, daß die Folienwicklung einen Bremseffekt auf das Lager bzw. den inneren Lagerzapfen ausübt.

Weitere vorteilhafte Ausgestaltungen des Erfindungsgegenstandes ergeben sich aus den Patentansprüchen 2 und 15.

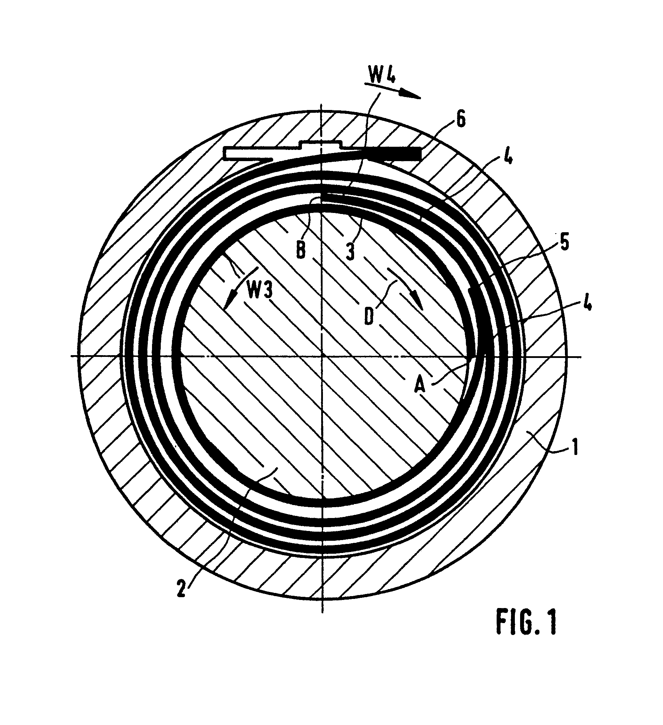

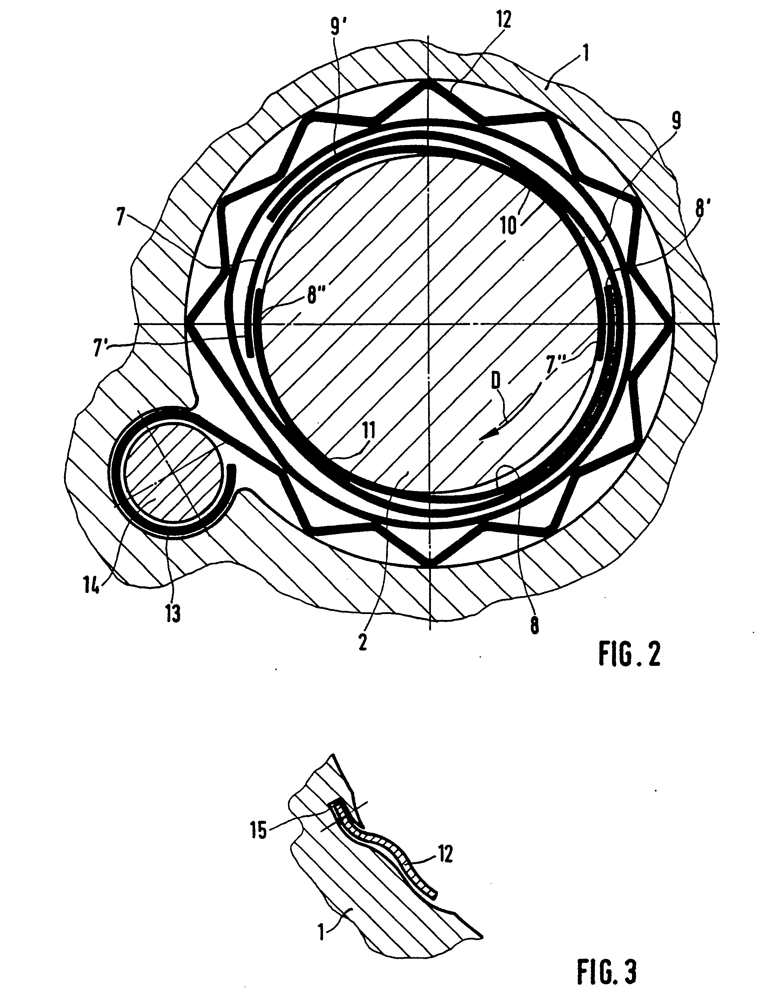

Die Erfindung ist anhand von Ausführungsbeispielen in den Patentzeichnungen nachstehend näher erläutert, worin die Fig. 1 und 2 sowie 4 und 5 im Querschnitt dargestellte Lageralternativen und Fig. 3 eine gegenüber Fig. 2 abweichende Befestigungsalternative des äußeren Folienendes an der Lagerschale verdeutlichen.

Zur Verdeutlichung der erfindungsgemäßen Wirkungsweise sind die betreffenden Folienabschnitte bei diesen Lageralternativen vergleichsweise dickwandig gezeichnet, wobei jedoch im tatsächlichen Anwendungsfall von den in der Beschreibungseinleitung erwähnten Bemessungsangaben der Foliendicken auszugehen wäre.

Fig. 1 veranschaulicht ein aerodynamisches Radiallager für hochtourige Strömungsmaschinen, bei dem zwischen der äußeren Lagerschale 1 und dem inneren Lagerzapfen 2 ein mehrfach um diesen Lagerzapfen gewickeltes Folienpaket vorgesehen ist. Gemäß dem Grundgedanken der Erfindung ist beim Ausführungsbeispiel nach Fig. 1 also ein Bandabschnitt 3 des inneren Folienteils entgegen der Zapfendrehrichtung D gewickelt (Wickelrichtung W3) und mit einem in Zapfendrehrichtung D gewickelten weiteren Bandabschnitt 4 des äußeren Folienteils verbunden (Wickelrichtung W4). Die betreffende Verbindungsstelle zwischen den beiden Bandabschnitten 3 und 4 ist durch das Bezugszeichen 5 gekennzeichnet, wobei eine derartige punktuell oder über einen Folienteilumfang sich erstreckend ausgeführte Folienverbindung z. B. durch Löten, Diffusionsschweißen, Preßschweißen oder Ultraschallschweißen vorgenommen werden kann. Wie weiter aus Fig. 1 hervorgeht, befindet sich das innere Ende A des Bandabschnitts 3 vom inneren Folienteil im Ablauf der Drehrichtung D des Drehzapfens 2; das innere Ende B des zum äußeren Folienteil gehörenden Bandabschnitts 4 ist zwischen einander benachbarten, spiralförmig gewickelten Folienpartien eingebettet angeordnet. Als Folge dieser Anordnung der Folienenden gemäß A und B wird also verhindert, daß sich an diesen genannten Folienenden Schmutzpartikel ablagern können, so daß keine Beeinträchtigung des Lagerbetriebs zu erwarten ist. Die im Sinne der Drehrichtung D des Drehzapfens 2 vorgenommene Wickelrichtung W4 des Bandabschnitts 4 ermöglicht die für einen einwandfreien Lagerbetrieb erforderliche Aufspreizung der Folie. Wie ferner aus Fig. 1 ersichtlich, ist im vorliegenden ausführungsbeispiel nach Fig. 1 das äußerste Ende des Folienbandes 4 innerhalb eines Tangentialschlitzes 6 der äußeren Lagerschale 1 festgelegt und dabei zusätzlich z. B. durch eine Verschraubung eine Bolzenverbindung oder dergleichen sicherbar. Im übrigen ist das Ausführungsbeispiel nach Fig. 1 dadurch gekennzeichnet, daß die Bandabschnitte 3 und 4 der Folie glattwandig ausgeführt sind.

Das Ausführungsbeispiel nach Fig. 2 weicht von Fig. 1 dahingehend ab, daß das die innere Lauffläche bildende Folienteil hier z. B. aus zwei jeweils Teilzapfenumschlingungen bildenden Bandabschnitten 7, 8 so zusammengesetzt ist, daß deren äußere Endteile 7', 8' die zapfenseitig unmittelbar benachbarten, im Drehrichtungsablauf liegenden inneren Endteile 8'', 7'' überlappen. Das Ausführungsbeispiel nach Fig. 2 zeichnet sich weiter gegenüber Fig. 1 dadurch aus, daß ein glattwandig vorgeformter Bandabschnitt 9 des äußeren Folienteils in einen dazugehörigen bzw. sich daran anschließenden gleichförmig wellenartig vorgeformten äußeren Bandabschnitt 12 übergeht. Dieser äußere wellenwartig vorgeformte Bandabschnitt 12 erstreckt sich einerseits zwischen der Lagerschaleninnenwand und andererseits zwischen dem glattwandigen Bandabschnitt 9. Dabei sind der glattwandige Bandabschnitt 9 und der wellenförmige äußere Bandabschnitt 12 im Zapfendrehsinne gewickelt. In Fig. 2 sind also die die innere Lauffläche des Lagers bildenden Bandabschnitte 7, 8 entgegen der Drehrichtung D des Drehzapfens 2 gewickelt angeordnet. Diese beiden Bandabschnitte 7, 8 sind an den Stellen 10 und 11 mit dem zum äußeren Folienteil gehörigen glattwandigen Bandabschnitt 9 verbunden und zwar in der Weise, daß das im Sinne einer Teilumschlingung über die Befestigungsstelle 10 weitergeführte innere Bandende 9'' des äußeren Folienteils zwischen Umschlingungspartien des letzteren auf der einen Seite und dem Bandabschnitt 7 des inneren Folienteils auf der anderen Seite zu liegen kommt. Dabei sind die äußeren Endteile 7', 8' der inneren Bandabschnitte 7, 8 ebenfalls vom Bandabschnitt 9 des äußeren Folienteils umschlungen. Die zuvor genannten Befestigungsstellen 10 und 11 können vorzugsweise in einer gemeinsamen Lagermeridianebene angeordnet sein, bzw. können sie gleichförmig in Lagerumfangsrichtung untereinander beabstandet angeordnet sein. Schon wie beim zuvor erwähnten Ausführungsbeispiel nach Fig. 1 können ebenso bei den Ausführungsbeispielen nach den Fig. 2, 4 und 5 die betreffenden Folienbefestigungen an den Stellen 10 und 11 durch Preßschweißen, Löten oder Diffusions- oder Ultraschallschweißen vorgenommen werden.

Fig. 2 weicht vom Ausführungsbeispiel nach Fig. 1 weiter dahingehend ab, daß das äußere Ende des Folienbandabschnitts 12 um einen innerhalb einer lagerachsparallelen Ausnehmung 13 des Lagergehäuses 1 rotationssymmetrisch angeordneten Bolzen 14 geschlungen ist. Durch diese Befestigungsweise des äußeren Endes des Bandabschnitts 12 am Lagergehäuse 1 kann ein kontinuierlich weicher Folienbandverlauf sowie Übergang der glattwandigen Folienbefestigungsstruktur in die wellenförmige Folienstruktur erreicht werden. Gemäß Fig. 3 wäre es aber durchaus vorstellbar, das äußere Ende des Folienbandes 12 über einen Tangentialschlitz 15 des Lagergehäuses 1 in der zu Fig. 1 schon beschriebenen Weise festzulegen.

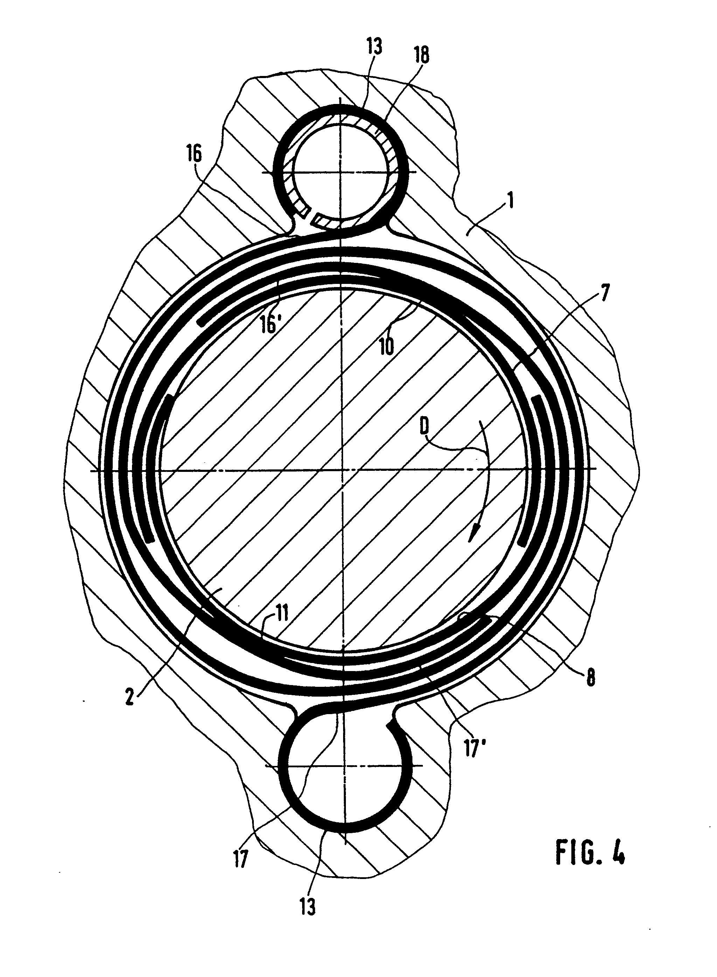

Die Lagervariante nach Fig. 4 ist gekennzeichnet durch zwei mit ihren äußeren Enden an der Lagerschale 1 befestigte und von dort unter zumindest teilweiser gegenseitiger Umschlingung gegen die Bandabschnitte 7, 8 des inneren Folienteils geführte und an diesen befestigte Bandabschnitte 16 und 17 des äußeren Folienteils. Von innen nach außen gesehen, sind die Bandabschnitte 16, 17 des äußeren Folienteils im Sinne der Drehrichtung D des Drehzapfens 2 gewickelt angeordnet. Darüber hinaus sind die beiden Bandabschnitte 16, 17 des äußeren Folienteils mit ihren die Befestigungspunkte 10, 11 überlappenden inneren Enden 16', 17' einerseits zwischen den zugeordneten Bandabschnitten 7, 8 des inneren Folienteils sowie jeweils einem der beiden Bandabschnitte 17, 16 des äußeren Folienteils angeordnet.

Fig. 4 veranschaulicht ferner zwei von den vorhergehenden Ausführungsbeispielen abweichende Befestigungsweisen der betreffenden äußeren Folienenden der Bandabschnitte 16 und 17, indem das lagenschalenartig ausmündende äußere Ende des Bandabschnitts 17 sich unter Vorspannung im wesentlichen an der Innenwand einer lagerachsparallelen zylindrischen Ausnehmung 13 der äußeren Lagerschale 1 anschmiegen und dabei bewegungselastisch gehaltert sein soll. Die Befestigung des Bandabschnitts 16 des äußeren Folienteils an der Lagerschale 1 schließt hierbei wiederum eine lagerachsparallele Ausnehmung 13 ein, innerhalb derselben jedoch anstelle des Bolzens 14 nach Fig. 2 ein als Spannklammer 18 ausgebildetes hülsenförmiges Bauteil vorgesehen ist, mit welchem das äußere Ende des Bandabschnitts 6 federnd an die Wand der zylindrischen Ausnehmung 13 angepreßt wird. Im übrigen gilt auch für Fig. 4 die schon in Fig. 2 angegebene Wirkungsweise aus dem Aufbau des inneren Folienteils in Form der Bandabschnitte 7, 8. Das Ausführungsbeispiel nach Fig. 4 zeichnet sich ferner dadurch aus, daß sämtliche Folienabschnitte 7, 8 bzw. 16, 17 eine glattwandige Struktur aufweisen.

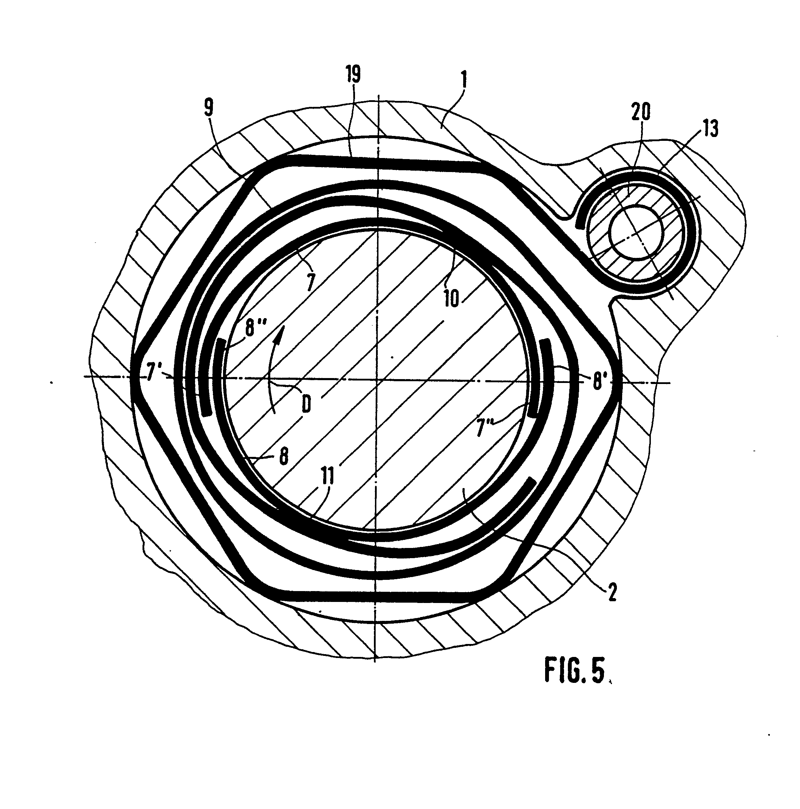

Unter Verwendung gleicher Bezugszeichen für insbesondere gegenüber Fig. 2 unveränderte Bauteile weicht das Ausführungsbeispiel nach Fig. 5 von Fig.2 u.a. hauptsächlich dahingehend ab, daß ein polygonartig forgeformter, über dem gesamten Lagerumfang sich zwischen der Innenwand der Lagerschale 1 und einem glattwandigen Bandabschnitt 9 dieses äußeren Folienteils erstreckender äußerer Bandabschnitt 19 vorgesehen ist. Dieser polygonartig vorgeformte Bandabschnitt 19 geht in den glattwandigen Bandabschnitt 9 über, wobei die zugehörigen Befestigungsstellen dieses Bandabschnitts 9 mit den die innere Lauffläche bildenden Bandabschnitten 7, 8 wieder durch die Bezugszeichen 10 u. 11 verdeutlicht sind und wobei sinngemäß in Entsprechung zu Fig. 2 auch für Fig.5 gilt, daß das aus den Bandabschnitten 9 bzw. 19 gebildete äußere Folienteil im Sinne der Drehrichtung D des Drehzapfens 2 gewickelt ist, während die Bandabschnitte 7 und 8, welche die innere Lauffläche bereitstellen, entgegengesetzt zur Drehrichtung D gewickelt sind, und zwar im Sinne der Grundsätze, wie sie schon im Rahmen der Fig. 2 angegeben worden sind. Das äußere Ende des Folienbandes 19 kann hier z.B. um ein hülsenartiges Bauteil 20 bzw. eine Buchse geschlungen sein, und zwar im Benehmen mit der zuvor schon zu den Ausführungsbeispielen nach Fig. 2 und 4 erwähnten achsparallelen Ausnehmung 13 im Lagergehäuse 1 zur Folienbefestigung. Alternativ wäre aber auch beim Ausführungsbeispiel nach Fig. 5 eine Befestigungsweise der Folie an der Lagerschale im Sinne der Fig. 2 oder 4 oder im Sinne der Fig. 1 und 3 vorstellbar.

Anstelle der genannten Tangentialschlitzbefestigungsalternativen für die Folie an der äußeren Lagerschale wäre es im Rahmen sämtlicher Lagerbeispiele nach der Erfindung durchaus vorstellbar, das äußerste Folienende innerhalb eines Radialschlitzes der äußeren Lagerschale zu befestigen und dabei z.B. eine zusätzliche Schrauben- oder Bolzensicherung oder eine Verschweißung oder eine anderweitige Klemmverankerung vorzusehen, um das betreffende Folienende in dem genannten Radialschlitz absolut sicher zu verankern.

Eine zeichnerisch nicht weiter verdeutlichte weitere Lagervariante der Erfindung besteht darin, daß ein oder mehrere entgegen der Zapfendrehrichtung gewickelte, glattwandige Bandabschnitte des inneren Folienteils mit einem zunächst im Sinne zumindest einer gänzlichen Zapfenumschlingung polygon- oder wellenförmig ausgebildeten weiteren Bandabschnitt des äußeren Folienteils verbunden sind, dessen restliche Bandstruktur im Sinne mindestens einer teilweisen oder gänzlichen Zapfenumschlingung wiederum glattwandig ausgebildet ist unter Zugrundelegung eines - von innen nach außen gesehen- in Drehrichtung gewickelten äußeren Folienteils (Anspruch 15).

Trotz der unterschiedlichen Winkelrichtungen der einzelnen Bandabschnitte eines jeweiligen Folienpakets wird insbesondere bei den Lagervarianten, bei denen die die innere Lauffläche bzw. die die eigentliche elastische Lagerschale bildenden Einzelbandabschnitte sich endseitig einander spiralförmig überlappen sowie von den betreffenden Befestigungsstellen aus sich fortsetzende Teilzapfen- bzw. Teilbandumschlingungen bereitstellen, eine gute, homogene Lagerdämpfung erzielt. In Kombination damit lassen der oder die Bandabschnitte des äußeren Folienteils hauptsächlich die erforderliche Federwirkung erzielen. Die Lagervarianten nach Fig. 2, 5 sowie Anspruch 15 ermöglichen mit Hilfe der wellen- bzw. polygonförmig vorgeformten Folienbandstruktur zumindest eines Teiles der äußeren Folienbahn die Einstellung der gewünschten Steifigkeitseigenschaften des Lagers.

Im Hinblick auf die betrieblichen Anforderungen besteht erfindungsgemäß selbstverständlich die Möglichkeit, die Anzahl insbesondere der die innere Lauffläche bzw. der die eigentliche elastische Lagerschale bereitstellenden Folienbandabschnitte zu erhöhen.

## Patentansprüche

1. Aerodynamisches Radiallager, insbesondere für hochtourige Strömungsmaschinen, mit einer zwischen äußerer Lagerschale (1) und Lagerzapfen (2) den letzteren mehrfach umschlingenden Folie, deren äußeres Ende an der Lagerschale fixiert ist, dadurch gekennzeichnet, daß der innere Folienteil aus mindestens einem Bandabschnitt (3, 7, 8) besteht, der entgegen der Zapfendrehrichten (D) gewickelt ist und mit dem aus mindestens einem in Zapfendrehrichtung (D) gewickelten Bandabschnitt (4, 9, 16, 16') bestehenden äußeren Folienteil verbunden ist.

2. Radiallager nach Anspruch 1, dadurch gekennzeichnet, daß die Bandabschnitte des inneren und/oder äußeren Folienteils im Sinne einer jeweils zumindest gänzlichen oder teilweisen Zapfenumschlingung ausgebildet sind.

3. Radiallager nach Anspruch 1 und 2, dadurch gekennzeichnet, daß der die innere Lauffläche bildende Folienteil aus einzelnen Teilzapfenumschlingungen bildenden Bandabschnitten (7, 8) so zusammengesetzt ist, daß deren äußere Endteile (7', 8') die zapfenseitig unmittelbar benachbarten, im Drehrichtungsablauf liegenden inneren Endteile (8'', 7'') dieser Bandabschnitte (7, 8) überlappen.

4. Radiallager nach einem oder mehrere der Ansprüche 1 bis 3, dadurch gekennzeichnet, daß ein oder mehrere Bandabschnitte (7, 8) des inneren Folienteils mit mindestens einem entgegengerichtet dazu gewickelten Bandabschnitt (9) des äußeren Folienteils in der Weise punktuell oder entlang Teilfächen miteinander verbunden sind, daß das im Sinne einer Teilumschlingung über die Befestigungsstelle (10) weitergeführte innere Bandende des äußeren Folienteils zwischen Umschlingungspartien des letzteren auf der einen Seite und einem Bandabschnitt (7) des inneren Folienteils auf der anderen Seite zu liegen kommt, wobei die äußeren Endteile (7', 8') der Bandabschnitte (7, 8) des inneren Folienteils ebenfalls vom Bandabschnitt (9) des äußeren Folienteils umschlungen sind.

5. Radiallager nach einem oder mehreren der Ansprüche 1 bis 4, gekennzeichnet durch mindestens zwei mit ihren äußeren Enden an der Lagerschale (1) befestigte und von dort unter zumindest teilweiser gegenseitiger Umschlingung gegen die Bandabschnitte (7, 8) des inneren Folienteils geführte und an diesem befestigte Bandabschnitte (16, 17) des äußeren Folienteils, die - von innen nach außen gesehen -, im Sinne der Zapfendrehrichtung (D) gewickelt und dabei mit ihren die Befestigungsstellen (10, 11) überlappenden inneren Enden (16', 17') einerseits zwischen den zugeordneten Bandabschnitten (7, 8) des inneren Folienteils und jeweils einem der beiden Bandabschnitte (17, 16) des äußeren Folienteils angeordnet sind.

6. Radiallager nach einem oder mehreren der Ansprüche 1 bis 5, dadurch gekennzeichnet, daß die Befestigungsstellen (10, 11) zwischen umfangsseitig zu verbindenden Bandabschnitten (7, 16 bzw. 8, 17) des äußeren und inneren Folienteils vorzugsweise in einer gemeinsamen Lagermeridianebene angeordnet sind.

7. Radiallager nach Anspruch 6, dadurch gekennzeichnet, daß die Bandabschnittsbefestigung durch Preßschweißen, Diffusionsschweißen oder Löten erfolgt.

8. Radiallager nach einem oder mehreren der Ansprüche 1 bis 7, dadurch gekennzeichnet, daß sämtliche Bandabschnitte (7, 16, 8, 17) eines Folienpaketes glattwandig ausgebildet sind.

9. Radiallager nach einem oder mehreren der Ansprüche 1, 2, 3, 4, 6 und 7 dadurch gekennzeichnet, daß der äußere Folienteil aus mindestens einem glattwandig vorgeformten Bandabschnitt (9) besteht, der in einen gleichförmig wellenartig vorgeformten äußeren Bandabschnitt (12) übergeht, der sich einerseits zwischen der Lagerschaleninnenwand und andererseits zwischen dem glattwandigen Bandabschnitt (9) erstreckt, wobei der glattwandige Bandabschnitt (9) des äußeren Folienteils mit mindestens einem glattwandigen Bandabschnitt (7) des inneren Folienteils verbunden ist.

10. Radiallager nach einem oder mehreren der Ansprüche 1, 2, 3, 4, 6 und 7, gekennzeichnet durch einen polygonartig vorgeformten, über dem gesamten Lagerumfang sich zwischen der Lagerschaleninnenwand und einem glattwandigen Bandabschnitt (9) dieses äußeren Folienteils erstreckenden äußersten Bandabschnitt (19), der über den glattwandigen Bandabschnitt (9) mit einem oder mehreren Bandabschnitten (7, 8) des inneren Folienteils verbunden ist.

11. Radiallager nach einem oder mehreren der Ansprüche 1 bis 10, dadurch gekennzeichnet, daß mindestens ein lagerschalenseitig ausmündendes äußerstes Ende eines Bandabschitts (4) in einem Radial- oder Tangentialschlitz (6) der Lagerschale (1) festgelegt ist und zwar durch Verschraubung, Verschweißung oder dergleichen.

12. Radiallager nach einem oder mehreren der Ansprüche 1 bis 10, dadurch gekennzeichnet, daß mindestens ein lagerschalenseitig ausmündendes äußerstes Ende eines Bandabschnitts (17) sich unter Vorspannung im wesentlichen an der Innenwand einer lagerachsparallelen zylindrischen Ausnehmung (13) der äußeren Lagerschale (1) anschmiegend bewegungsweich gehaltert ist.

13. Radiallager nach Anspruch 12, dadurch gekennzeichnet, daß das mindestens eine äußerste Ende eines Folienbandabschnitts (12) um einen innerhalb der Ausnehmung (13) im wesentlichen rotationssymmetrisch angeordneten Bolzen (14) oder (19) um ein hüsenförmiges Bauteil (20) geschlungen ist.

14. Radiallager nach Anspruch 13, dadurch gekennzeichnet, daß das hülsenförmige Bauteil als Folienspannklammer (18) ausgebildet ist.

15. Radiallager nach einem oder mehreren der Ansprüche 1 bis 4, 6, 7 sowie 11 bis 14, dadurch gekennzeichnet, daß ein oder mehrere glattwandige Bandabschnitte des inneren Folienteils mit einem zunächst im Sinne zumindest einer gänzlichen Zapfenumschlingung polygon- oder wellenförmig ausgebildeten Bandabschnitt des äußeren Folienteils verbunden sind, dessen restliche Bandstruktur im Sinne einer Teil- oder Vollzapfenumschlingung wiederum glattwandig ausgebildet ist.

## Claims

1. Aerodynamic radial bearing, in particular for high-speed fluid flow engines, with, between outer bearing shell (1) and bearing journal (2) and looped several times around the latter a foil of which the outer end is fixed on the bearing shell, characterized in that the inner foil part consists of at least one strip portion (3, 7, 8) which is wound against the direction of journal rotation (D) and which is connected to the outer foil part consisting of at least one strip portion (4, 9, 16, 16') wound in the direction of journal rotation (D).

2. Radial bearing according to Claim 1, characterized in that the strip portions of the inner and/or outer foil part are constructed in the sense of an at least whole or partial loop around the journal.

3. Radial bearing according to Claim 1 and 2, characterized in that the foil part, which forms the inner working surface is so composed of strip portions (7, 8) which form individual loopings around journals that their outer end parts (7', 8') overlap those inner end parts (8'', 7'') of this strip portions (7, 8) which are on the journal side immediately adjacent, in the direction of rotation.

4. Radial bearing according to one or more of Claims 1 to 3, characterized in that one or a plurality of strip portions (7, 8) of the inner foil part are connected to at least one strip portion (9) of the outer film part, wound in the opposite direction, spotwise or along partial areas, that the inner strip end of the outer foil part which extends over the attachment point (10) in such a way as to form a partial loop, comes to rest between looping parts of the foil part on one side and a strip portion (7) of the inner foil part on the other, the outer end parts (7', 8') of the strip portions (7, 8) of the inner foil part are likewise looped around by the strip portion (9) of the outer foil part.

5. Radial bearing according to one or more of Claims 1 to 4, characterized by, with their outer ends fixed on the bearing shell (1), at least two strip portions (16, 17) of the outer foil part which are fixed on are guided from the bearing shell (1) and with at least partial and mutual looping, towards the strip portions (7, 8) and which - viewed from the inside outwardly - are wound in the direction of journal rotation (D), their inner ends (16', 17') which overlap the attachment points (10, 11) being disposed on the one hand between the associated strip portions (7, 8) of the inner foil part and in each case one of the two strip portions (17, 16) of the outer foil part.

6. Radial bearing according to one or more of Claims 1 to 5, characterized in that the attachment points (10, 11) are disposed between peripherally to be connected strip portions (7, 16 or 8, 17) of the outer and inner foil part, preferably in one common meridian bearing plane.

7. Radial bearing according to Claim 6, characterized in that the strip portions are attached by pressure welding, diffusion welding or soldering.

8. Radial bearing according to one or more of Claims 1 to 7, characterized in that all strip portions (7, 16, 8, 17) of one foil package are smooth-walled.

9. Radial bearing according to one or more of Claims 1, 2, 3, 4, 6 and 7, characterized in that the outer foil part consists of at least one smooth-walled preformed strip portion (9), which blends into a uniformly undulatingly preformed outer strip portion (12), extending on the one hand between the inner wall of the bearing shell and on the other between the smooth-walled strip portion (9), the smooth-walled strip portion (9) of the outer foil part being connected to at least one smooth-walled strip portion (7) of the inner foil part.

10. Radial bearing according to one or more of Claims 1, 2, 3, 4, 6 and 7, characterized by a polygonally preformed outermost strip portion (19) which extends over the entire bearing periphery between the inner wall of the bearing shell and a smooth-walled strip portion (9) of this outer foil part, the strip portion (19) being connected via the smooth-walled strip portion (9) to one or more strip portions (7, 8) of the inner foil part.

11. Radial bearing according to one or more of Claims 1 to 10, characterized in that at least one outermost end of a strip portion (4) which exteds onto the bearing shell side is fixed in a radial or tangential slot (6) in the bearing shell, in fact by screwing, welding or the like.

12. Radial bearing according to one or more of Claims 1 to 10, characterized in that at least one outermost end of a strip portion (17) which extends onto the bearing shell side is maintained with pretension for soft movement with and substantially snugly against the inner wall of a cylindrical recess (13) parallel with the bearing axis.

13. Radial bearing according to claim 12 characterized in that at least one outermost end of a foil strip portion (12) is looped around a sleeve-like component (20) at (19) or about a substantially rotationally symmetrically disposed bolt (14).

14. Radial bearing according to Claim 13, characterized in that the sleeve-like component is constructed as a foil clamping clip (18).

15. Radial bearing according to one or more of Claims 1 to 4, 6, 7 and 11 to 14, characterized in that one or a plurality of smooth-walled strip portions of the inner foil part is/are connected to a polygonally or undulatingly constructed strip portion of the outer foil part adapted to form initially at least one complete loop around the journal, the rest of the strip structure being in turn smooth-walled to provide a partial or a complete loop around the journal.

# Revendications

1.- Palier radial aérodynamique, notamment pour des turbo-machines à grande vitesse, avec entre le coussinet externe de palier (1) et le tourillon de palier du feuillard est constituée d'au moins un tronçon de bande (3, 7, 8) qui est enroulé en sens contraire du sens de rotation (D) du tourillon, et qui est relié à la partie externe du feuillard constituée d'au moins un tronçon de bande (4, 9, 16, 16') enroulé dans le sens de rotation (D) du tourillon.

2.- Palier radial selon la revendication 1, caractérisé en ce que les tronçons de bande de la partie interne et/ou de la partie externe du feuillard, sont réalisés de façon à entourer respectivement au moins en totalité ou bien en partie, le tourillon.

3.- Palier radial selon la revendication 1 ou 2, caractérisé en ce que la partie de feuillard constituant la surface interne de glissement, est composée de tronçons de bande (7, 8) constituant des enveloppements partiels individuels du tourillon, de façon que leurs parties externes d'extrémités (7', 8') empiètent sur les parties internes d'extrémités (8'', 7'') de ces tronçons de bande (7, 8) directement voisines côté tourillon et placées en régréssion par rapport au sens de rotation.

4.- Palier radial selon une ou plusieurs des revendications 1 à 3, caractérisé en ce qu'un ou plusieurs tronçons de bande (7, 8) de la partie interne du feuillard, sont reliés ponctuellement ou bien le long de surfaces partielles, à au moins un tronçon de bande (9), enroulé dans le sens opposé aux leurs, de la partie externe du feuillard, de sorte que l'extrémité interne de la bande de la partie externe du feuillard, prolongée au-delà du point de fixation (10) à la façon d'un enroulement partiel, vienne se placer entre les parties d'enveloppement de la partie externe du feuillard d'un côté et un tronçon de bande (7) de la partie interne du feuillard de l'autre côté, les parties externes d'extrémités (7', 8') des tronçons de bande (7, 8) de la partie interne du feuillard étant également entourées par le tronçon de bande (9) de la partie externe du feuillard.

5.- Palier radial selon une ou plusieurs des revendications 1 à 4, caractérisé en ce qu'au moins deux tronçons de bande (16, 17) de la partie externe du feuillard, fixés par leurs extrémités externes au coussinet de palier (1) et allant à partir de là, en formant au moins partiellement des enveloppements opposés, vers les tronçons de bande (7, 8) de la partie interne du feuillard auquel ils sont fixés, sont, lorsqu'on les voit de l'intérieur vers l'extérieur, enroulés dans le sens de rotation (D) du tourillon et leurs extrémités internes (16', 17') empiétant sur les points de fixation (10, 11), sont alors disposés entre les tronçons de bande associés (7, 8) de la partie interne du feuillard et respectivement un des deux tronçons de bande (17, 16) de la partie externe du feuillard.

6.- Palier radial selon une ou plusieurs des revendications 1 à 5, caractérisé en ce que les points de fixation (10, 11) sont disposés entre des tronçons de bande (7, 16 ou bien 8, 17) à relier côté périphérie de la partie externe et de la partie interne de feuillard, de préférence dans un plan méridien commun du palier.

7.- Palier radial selon la revendication 6, caractérisé en ce que la fixation des tronçons de bande s'effectue par soudage sous pression, par soudage par diffusion ou bien par brasage.

8.- Palier radial selon une ou plusieurs des revendications 1 à 7, caractérisé en ce que l'ensemble des tronçons de bande (7, 16, 8, 17) d'un paquet de feuillards sont prévus à paroi lisse.

9.- Palier radial selon une ou plusieurs des revendications 1, 2, 3, 4, 6 et 7, caractérisé en ce que la partie externe du feuillard est constituée d'au moins un tronçon de bande préformé à paroi lisse (9), qui se transforme en un tronçon de bande externe préformé selon des ondulations régulières, et qui s'étend, d'une part, entre la paroi interne du coussinet de palier et d'autre part, le tronçon de bande à paroi lisse (9), ce tronçon de bande à paroi lisse (9) de la partie externe du feuillard étant relié à au moins un tronçon de bande à paroi lisse (7) de la partie interne du feuillard.

10.- Palier radial selon une ou plusieurs des revendications 1, 2, 3, 4, 6 et 7, caractérisé en ce qu'il comporte un tronçon de bande externe (19) préformé selon un polygone, et qui s'étend sur toute la périphérie du palier entre la paroi interne du coussinet de palier et un tronçon de bande à paroi lisse (9) de la partie externe du feuillard, ce tronçon de bande (19) étant relié par l'intermédiaire du tronçon de bande à paroi lisse (9) avec un ou plusieurs tronçons de bande (7, 8) de la partie interne du feuillard.

11.- Palier radial selon une ou plusieurs des revendications 1 à 10, caractérisé en ce qu'au moins une extrémité externe, débouchant côté coussinet de palier, d'un tronçon de bande (4) est fixée dans une fente radiale ou tangentielle (6) du coussinet de palier (1) cette fixation s'effectuant par vissage, soudage ou un moyen analogue.

12.- Palier radial selon une ou plusieurs des revendications 1 à 10, caractérisé en ce qu'au moins une extrémité externe, débouchant côté coussinet de palier, d'un tronçon de bande (17) est maintenue, avec une certaine souplesse de déplacement, en s'appliquant sous précontrainte, contre la paroi d'un évidement cylindrique (13), parallèle à l'axe du palier, du coussinet externe de palier (1).

13.- Palier radial selon la revendication 12, caractérisé en ce qu'au moins l'une des extrémités externes d'un tronçon de bande de feuillard (12) entoure un axe (14) disposé selon en pratique une symétrie de révolution à l'intérieur de l'évidement (13) ou bien entoure une pièce constitutive en forme de douille (20).

14.- Palier radial selon la revendication 13, caractérisé en ce que la pièce constitutive en forme de douille revêt la forme d'une pince (18) de serrage du feuillard.

15.- Palier radial selon une ou plusieurs des revendications 1 à 4, 6, 7 ainsi que 11 à 14, caractérisé en ce qu'un ou plusieurs tronçons à paroi lisse de la partie interne du feuillard sont reliés à un tronçon de bande de la partie externe du feuillard, revêtant tout d'abord la forme d'au moins un enveloppement total polygonal ou ondulé du tourillon, la partie résiduelle de la structure de la partie externe du feuillard revêtant la forme d'un enveloppement partiel ou complet à paroi lisse du tourillon.

FIG. 1

FIG. 2

FIG. 3

FIG. 4

0 143 198

FIG.5.

7